**Europäisches Patentamt**

**European Patent Office**

**Office européen des brevets**

(19)

(11) Veröffentlichungsnummer : **0 081 789**
**B1**

(12) **EUROPÄISCHE PATENTSCHRIFT**

(45) Veröffentlichungstag der Patentschrift :
20.08.86

(51) Int. Cl.⁴ : **G 03 B 27/62**

(21) Anmeldenummer : **82111279.4**

(22) Anmeldetag : **06.12.82**

(54) Vorrichtung zum Repetieren von Kopieroriginalen in einem Kopiergerät.

(30) Priorität : **16.12.81 DE 3149805**

(43) Veröffentlichungstag der Anmeldung :
**22.06.83 Patentblatt 83/25**

(45) Bekanntmachung des Hinweises auf die Patenterteilung : **20.08.86 Patentblatt 86/34**

(84) Benannte Vertragsstaaten :
**BE DE FR GB IT NL**

(56) Entgegenhaltungen :
**DE-A- 2 657 198**
**US-A- 4 065 119**
**US-A- 4 072 306**

(73) Patentinhaber : **HOECHST AKTIENGESELLSCHAFT**
**Postfach 80 03 20**
**D-6230 Frankfurt am Main 80 (DE)**

(72) Erfinder : **Neumann, Jürgen**
**Wachenheimer Strasse 29**
**D-6237 Liederbach (DE)**

**Beschreibung**

Die Erfindung betrifft eine Vorrichtung zum Repetieren von Kopieroriginalen in einem Kopiergerät, mit einer schwenkbaren Weiche für die getrennte Ausgabe von Originalen kleinerer und größerer Formate.

Eine derartige Vorrichtung ist aus der DE-C-26 57 198 bekannt, bei der die Vorderkante einer Kopiervorlage während der Repetierumläufe von einer Greifereinheit geführt ist, die sich längs einer geschlossenen Bahn bewegt. Bei diesem Kopiergerät sind zwei Ablagetische unterhalb der Repetiervorrichtung vorgesehen, von denen der obere Ablagetisch die kleineren Formate und der untere Ablagetisch die größeren Formate aufnimmt. Bei großen Formaten, beispielsweise DIN-A-0 und A-1 ist die Weiche weggeschwenkt und eine unterhalb der Repetiervorrichtung befindliche Luftdüse eingeschaltet, welche die Rückseite der Kopiervorlage mit Blasluft beaufschlagt. Dabei wird die von der Kopiervorlage gebildete Schlaufe nicht abgestützt, sondern hängt vielmehr frei nach unten. Der Luftstrom soll dabei die Schlaufe entsprechend aufblähen, um zu geringe Radien in der Schlaufe zu vermeiden, die leicht zu Knickstellen in der Kopiervorlage führen können.

Dabei hat es sich gezeigt, daß der Luftstrom der Luftdüsen üblicherweise für eine bestimmte Papierbeschaffenheit bzw. Qualität zufriedenstellende Ergebnisse liefert, jedoch bei einer davon abweichenden Papierqualität in bezug auf die Steifigkeit oder wenn Knicke, Falten, Hängestreifen u. dgl. in der Kopiervorlage vorhanden sind, eine definierte Schlaufe mit über die Schlaufenbreite gleichen Radien nicht gebildet werden kann. Dadurch bedingt treten in der Kopiervorlage bei mehrfacher Repetierung Knicke auf, die insbesondere bei spröden Materialien, falls es sich um alte Transparente handelt, nach weiteren Repetierungen zu Rissen und damit zur Unbrauchbarkeit der Kopiervorlage führen können. Nachteilig kann dabei auch sein, daß Originale großen Formats, wie DIN-A-0 und A-1 nach dem Verlassen der Transportrollen der Repetiervorrichtung durch Herabfallen auf den Ablagetisch beschädigt werden können.

Aufgabe der Erfindung ist es, die eingangs beschriebene Vorrichtung zum Repetieren von Kopieroriginalen so zu verbessern, daß eine materialschonende Repetierung unabhängig von der jeweiligen Materialbeschaffenheit der Kopiervorlage erhalten wird und daß die Schlaufenbildung der Kopieroriginale während des Repetierens stets mit gleichen Krümmungsradien erfolgt.

Die Aufgabe wird erfindungsgemäß dadurch gelöst, daß die Weiche in der Repetierstellung zusammen mit einem gekrümmten Zusatzleitblech einen Schlaufenraum für Originale größerer Formate bildet, gegen dessen Innenseite das Kopieroriginal durch Blasluft während des Repetiervorgangs angedrückt ist.

Dabei weisen die Weiche und das Zusatzleitblech eine auf das Format DIN-A-0 abgestimmte Größe und Länge auf.

In Ausgestaltung der Erfindung besitzt die Weiche einen knickartigen Verlauf und besteht aus unter jeweils einem stumpfen Winkel aneinandergrenzenden ebenen Teilen. Selbstverständlich kann die Weiche auch aus gekrümmten Teilen zusammengesetzt sein, die stetig aneinander anschließen.

In Ausbildung der Erfindung ist das eine Ende der Weiche über ein Hebelgestänge mit der Welle eines Getriebemotors verbunden, der im Zusammenwirken mit Schaltern die Weiche in mehreren Stellungen positioniert. Dazu beschreibt der direkt mit der Welle des Getriebemotors verbundene Hebel eine Kreisbahn, entlang deren Umfang Schalter angeordnet sind, die durch die freie Stirnfläche des Hebels schaltbar sind. Die Schalter sind zweckmäßigerweise Mikroschalter, von denen ein erster Schalter die Repetierstellung, ein dritter Schalter die Ausgabestellung für DIN-A-1- und DIN-A-0-Formate des Kopieroriginals und ein zweiter Schalter die Ausgabestellung der Weiche für DIN-A-2-, A-3-, A-4-Formate des Kopieroriginals festlegen, sobald sie der Hebel betätigt.

Um den Schlaufenraum gezielt aufzublasen, sind zu beiden Seiten des von der Weiche und dem Zusatzleitblech gebildeten Schlaufenraums zwei Luftdüsen angeordnet, deren Luftströme so gerichtet sind, daß sie eine im Schlaufenraum befindliche Originalschlaufe während des Repetiervorgangs gegen die Weiche und das Zusatzleitblech andrücken.

Mit der Erfindung wird der Vorteil erzielt, daß das Kopieroriginal in einem vorgegebenen, begrenzten Schlaufenraum zwangsgeführt ist, so daß die Schlaufe stets die gleichen Krümmungsradien durchläuft, unabhängig von der Materialbeschaffenheit der Kopiervorlage, wodurch das Auftreten von Knicken, Falten und Einrissen weitgehend vermieden wird.

Die Erfindung wird im folgenden anhand eines in den Zeichnungen dargestellten Ausführungsbeispiels näher erläutert.

Es zeigen :

Figur 1 in schematischer Darstellung eine bekannte Repetiervorrichtung ;

Figur 2 das Ablegen eines großformatigen Kopieroriginals auf einen Ablagetisch ;

Figur 3 eine schematische und perspektivische Ansicht der Repetiervorrichtung nach der Erfindung ; und

Figur 4 den Verstellmechanismus der Repetiervorrichtung nach Fig. 3.

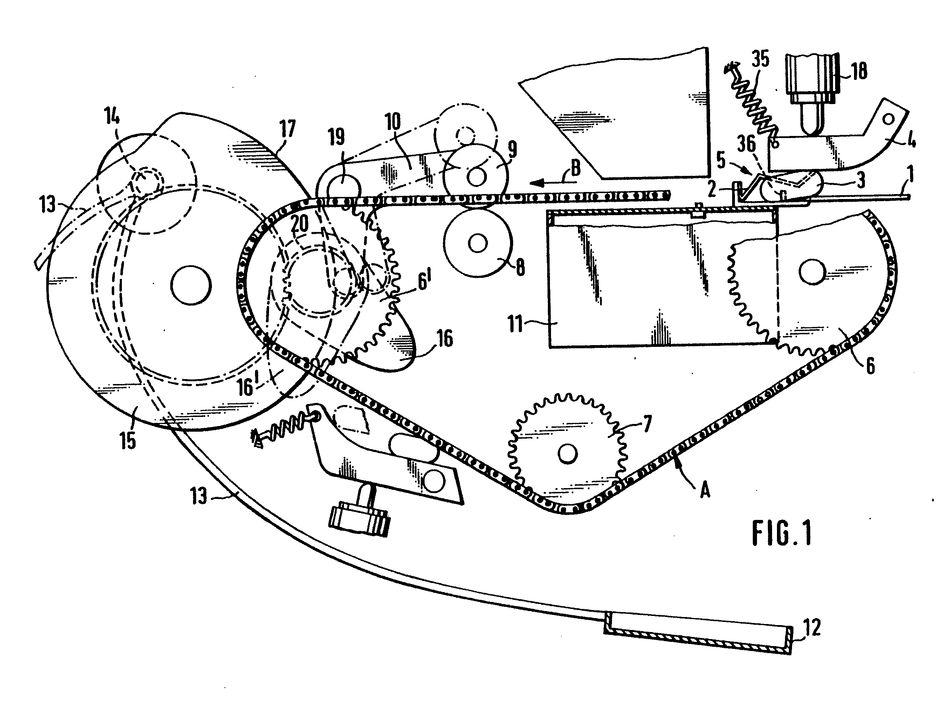

In Fig. 1 ist die bekannte Repetiervorrichtung nach der DE-PS 26 57 198 schematisch dargestellt, bei der ein Kopieroriginal 1 von rechts nach links in Richtung des Pfeils B von einer Greifereinheit 5 transportiert wird. Die Greifereinheit umfaßt einzeln gefederte Greifer 2, die an einem L-förmigen Greiferträger in Querrichtung zur Bahn A in gleichen Abständen voneinander befestigt sind. In der Warteposition der Greifereinheit sind die Greifer 2 geöffnet. Wird das Kopieroriginal 1 in die Greifereinheit 5 eingeführt, so schließen die Greifer 2, sobald das Kopieroriginal 1 richtig ausgerichtet ist. Die Greifer 2 sind bevorzugt Blattfedern, die an einem Schenkel des L-förmigen Greiferträgers befestigt sind. Die Blattfedern der Greifer 2 können beispielsweise zickzackförmig gewinkelt sein.

Die Greifereinheit 5 ist beidseitig mit Transportketten verbunden, die über ein vorderes und ein hinteres Paar von Kettenrädern 6, 6' geführt sind und von je einem Kettenspannrad 7 unter Spannung gehalten werden. Die paarweise vorhandenen vorderen und hinteren Kettenräder 6, 6' sowie die Kettenspannräder 7 sind zueinander dreiecksförmig angeordnet, wobei die Transportketten endlos um diese Räder umlaufen.

Das Öffnen und Schließen der Greifer 2 erfolgt in der Weise, daß zu beiden Seiten der Greifereinheit 5 in der Ebene von Greiferarmen 3 je ein gewinkeltes Schwenkblech 4 angeordnet ist, das mittels eines Hubmagneten 18 und einer Zugfeder 35 in die Bahn des jeweiligen betreffenden Greiferarms 3 hineingeschwenkt oder aus dieser herausgezogen werden kann. Das Schwenkblech 4 ist gewinkelt ausgebildet und um eine Achse schwenkbar. An dem einen Ende des Schwenkblechs 4 greift die Zugfeder 35 an, während der Hubmagnet 18 mit seinem Stößel gegen die obere Fläche des einen Winkels des Schwenkblechs 4 anliegt. Die beiden Hubmagnete 18 werden betätigt, sobald die Vorderkante des Kopieroriginals 1 voll gegen Anschläge 36 anliegt. Die Stößel der Hubmagnete 18 rücken die Schwenkbleche 4 gegen die Zugwirkung der Zugfedern 35 nach unten, wodurch die Greiferarme 3, sobald sie die Schwenkbleche 4 passieren, verschwenkt werden und die Schließstellung einnehmen.

Das Kopieroriginal wird bis zu seiner freien Hinterkante von einem Saugtisch 11 im optischen Abtastbereich für das Kopieroriginal niedergehalten. Nach dem optischen Abtastbereich sind untere Transportrollen 8 und obere Transportrollen 9 angeordnet, die sich über die Breite der Bahn A verteilt gegenüberliegen. Die durchgehend angetriebene Welle der unteren Transportrollen 8 ist lagefest, während die Achse der oberen Transportrollen 9 über einen Hebel 10 verschwenkbar ist, der von einer Kurvenscheibe 15 gesteuert wird. Die Kurvenscheibe 15 läuft synchron mit dem hinteren Paar Kettenräder 6' um. Die Kurvenscheibe 15 ist derart ausgebildet, daß sie die Achse der oberen Transportrollen 9 anhebt, wobei der Hebel um seinen Drehpunkt 19 schwenkt, sobald die Greifereinheit 5 den optischen Abtastbereich durchläuft. Dadurch ist es möglich, daß die Greifereinheit 5 zwischen den ortsfesten unteren Transportrollen 8 und den von der Bahn A abgehobenen Transportrollen 9 hindurchfahren kann. Hat die Greifereinheit 5 diese Stelle passiert, so werden die oberen Transportrollen 9 wieder abgesenkt und der Weitertransport des Kopieroriginals 1 erfolgt dann durch die Transportrollen 8 und 9.

Im Bereich der Kurvenscheibe 15, außerhalb der Bahn A des Kopieroriginals 1 ist eine Weiche 13 an einer Welle 14 befestigt, deren Wirkungsweise noch näher beschrieben werden wird.

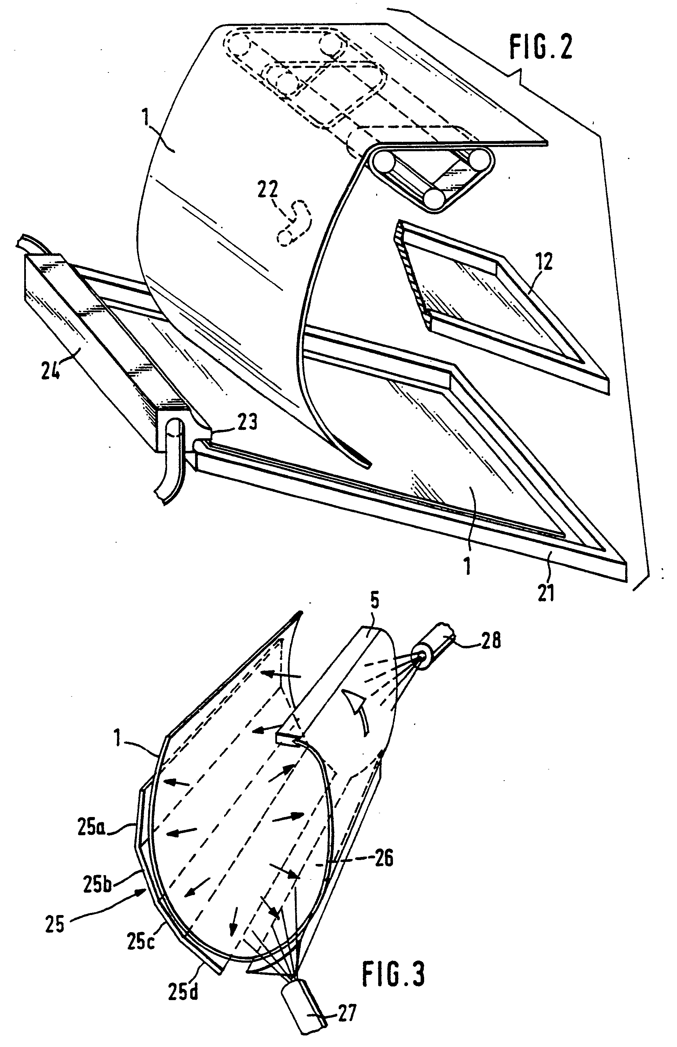

Auf einer Welle 20 der hinteren Kettenräder 6' sitzen über die Breite der Bahn A verteilte Finger, deren eingeschwenkte Stellung 16 in Fig. 1 mit vollen Linien und deren ausgeschwenkte Stellung 16' mit gestrichelten Linien dargestellt ist. Das Verschwenken der Finger bewirkt ein Ausbeulen des vorbeigeführten Kopieroriginals 1 und erleichtert somit das Austragen der großformatigen Kopieroriginale 1 auf einen unteren Ablagetisch 21 (Fig. 2), da durch das kurzzeitige Ausbeulen die Vorderkante des Kopieroriginals 1 aus den geöffneten Greifern 2 herausgleitet.

Nahe der Bahn A unterhalb des hinteren Paares von Kettenrädern 6' ist ein weiteres, nicht näher bezeichnetes Schwenkblech vorgesehen, das ähnlich zu dem Schwenkblech 4 aufgebaut ist. Das Verschwenken dieses Schwenkbleches öffnet die Greifer 2, sobald die Greifereinheit 5 das Schwenkblech passiert. Die Transportrollen 8 und 9 können dann das Kopieroriginal 1 bis zur Ausgabestelle weiterbefördern. Das Öffnen der Greifer 2 durch das hintere Schwenkblech erfolgt bei Einzelkopien oder während des letzten Durchlaufs der Kopiervorlage beim Repetieren. Während der übrigen Durchläufe beim Repetierbetrieb ist das hintere Schwenkblech nicht in die Bahn des Kopieroriginals geschwenkt, so daß die Greifer 2 geschlossen bleiben.

Die Kopiervorlagen kleineren Formats, wie beispielsweise DIN-A-2, A-3 und A-4 werden von den größeren Formaten wie DIN-A-0 und DIN-A-1 getrennt ausgegeben. Diese Trennung erfolgt mittels der Weiche 13, die bei den kleineren Formaten an die Bahn A angeschwenkt wird und bei den großen Formaten, wie in Fig. 1 strichpunktiert dargestellt ist, weggeschwenkt ist.

Aus Fig. 2 ist ersichtlich, daß zwei Ablagetische 12 und 21 unterhalb der Repetiervorrichtung vorgesehen sind, von denen der obere Ablagetisch 12 die kleineren Formate und der untere Ablagetisch 21 die größeren Formate aufnimmt. Sobald der einzige Durchlauf des Kopieroriginals 1 oder der letzte Durchlauf dieses Kopieroriginals innerhalb eines Repetiervorgangs stattfindet und das hintere Schwenkblech, wie voranstehend beschrieben wurde, die Greifer 2 geöffnet hat, wird das Kopieroriginal 1 durch die unteren und oberen Transportrollen 8 bzw. 9 auf den oberen Ablagetisch 12 ausgetragen. Bei großen Formaten ist die Weiche 13 weggeschwenkt und eine unterhalb der Repetiervorrichtung befindliche Luftdüse 22 eingeschaltet, welche die Rückseite des Kopieroriginals 1 mit Blasluft beaufschlagt. Dadurch soll sichergestellt werden, daß sich das großformatige Kopieroriginal 1 nicht faltet, sondern sich entlang einer gleichmäßig gekrümmten Bahn in Richtung auf den unteren Ablagetisch 21 hin bewegt. Auf diesem können beispielsweise schon ein oder mehrere Kopieroriginale 1 abgelegt sein. Im geringen, seitlichen Abstand oberhalb des Ablagetisches 21 befindet sich eine Luftkammer 24 mit einer Luftdüse 23, durch die Tragluft in Richtung des Kopieroriginals 1 ausströmt. Diese Tragluft richtet die Vorderkante des Kopieroriginals 1 bogenförmig zu der Fläche des Ablagetisches 21 aus und ermöglicht eine einwandfreie Ablage auch dann, wenn schon mehrere Kopieroriginale von vorangehenden Kopiervorgängen auf dem Ablagetisch 21 gestapelt sind. Üblicherweise ist die Luftdüse 22, welche die Blasluft liefert, bei jedem neuen Durchlauf des Kopieroriginals 1 eingeschaltet, um ein Luftpolster zu bilden, das eventuelle Versteifungen, verursacht durch Einrisse oder Knickstellen im Kopieroriginal, verhindert. Die Luftdüse 23 für die Tragluft ist eingeschaltet und wird nach dem letzten Durchlauf des Kopieroriginals 1 mit einer gewissen Zeitverzögerung ausgeschaltet, wobei gleichzeitig die Luftdüse 22 für die Blasluft eingeschaltet wird. Dadurch ist sichergestellt, daß keine Faltung des Kopieroriginals 1, das mit der Vorderkante auf dem unteren Ablagetisch 21 aufliegt, stattfindet. Die unteren und oberen Transportrollen 8 bzw. 9 befördern das Kopieroriginal bis zu dessen vollständigem Verlassen der Repetiervorrichtung weiter.

In Fig. 3 ist schematisch und perspektivisch eine Ausführungsform der Erfindung, bestehend aus einer Weiche 25 und einem Zusatzleitblech 26 dargestellt. Die Weiche 25 ist in der Repetiervorrichtung nach Fig. 1 anstelle der Weiche 13 vorgesehen und wirkt mit dem Zusatzleitblech 26 und Luftdüsen 27, 28 bei der Schlaufenbildung des Kopieroriginals zusammen. Die zuvor beschriebene Wirkungsweise der Repetiervorrichtung bleibt, bis auf die anders ablaufende Schlaufenbildung des Kopieroriginals, unverändert. Die Weiche 25 und das Zusatzleitblech 26 besitzen eine auf das Format DIN A 0 abgestimmte Größe und Länge und werden nur für die DIN A 0 und A 1-Formate in Betrieb gesetzt. Die Weiche 25 weist einen knickartigen Verlauf auf, wobei ebene Teile 25a, 25b, 25c, 25d jeweils unter einem stumpfen Winkel aneinandergrenzen. Der Winkel zwischen diesen Teilen kann im Bereich von 145° bis 165° liegen.

Zu beiden Seiten des von der Weiche 25 und dem Zusatzleitblech 26 gebildeten Schlaufenraums sind die beiden Luftdüsen 27 und 28 angeordnet, deren Luftströme so gerichtet sind, daß sie das im Schlaufenraum befindliche Kopieroriginal 1 während des Repetiervorgangs bzw. des Durchlaufs des Schlaufenraums gegen die Innenseite der Weiche 25 und des Zusatzleitblechs 26 andrücken. Während des Durchlaufs des Kopieroriginals 1 wird dieses an der Vorderkante von der Greifereinheit 5 festgehalten und von dieser weiterbefördert.

Die Weiche 25 weist in Fig. 3 einen knickartigen Verlauf auf, wie voranstehend schon erläutert wurde. Jedoch ist auch eine Ausgestaltung der Weiche 25 in der Weise möglich, daß sie anstelle von ebenen Teilen aus gekrümmten Teilen zusammengesetzt ist, von denen jedes Teil einen anderen Krümmungsradius besitzt, wobei jedoch die einzelnen Teile im wesentlich stetig aneinander anschließen.

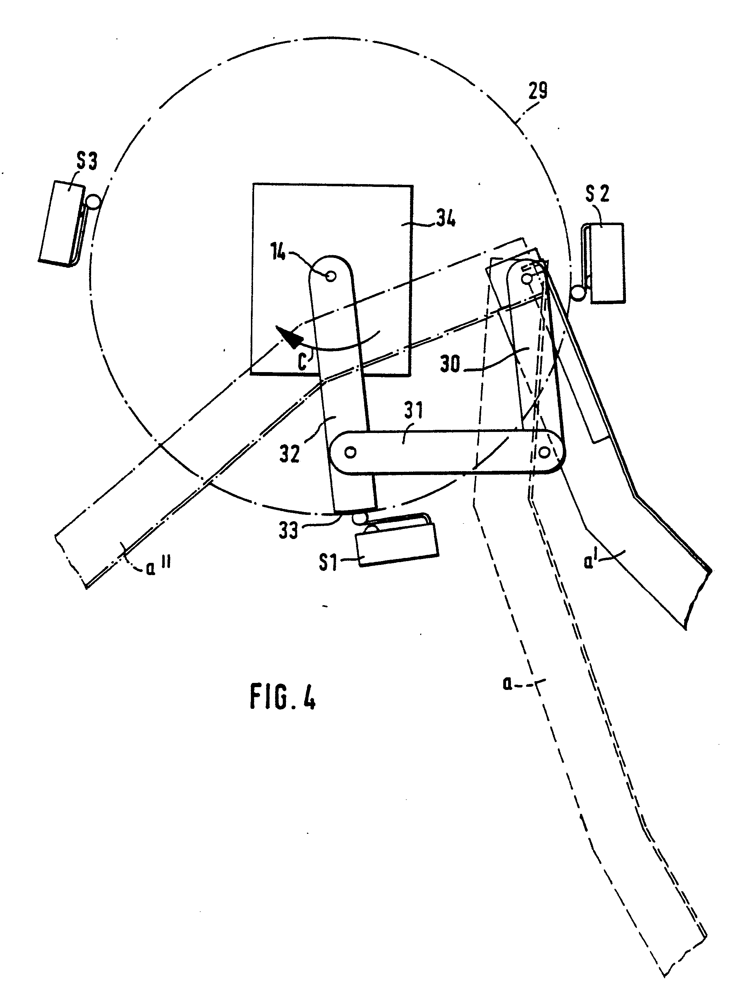

Anhand von Fig. 4 wird die Verstellung der Weiche 25 beschrieben. Das eine Ende der Weiche 25 ist über ein Hebelgestänge 30, 31, 32 mit der Welle 14 eines Getriebemotors 34 verbunden. Dieser Getriebemotor 34 ist in Fig. 4 aus Gründen der besseren Übersichtlichkeit nicht in den Einzelheiten dargestellt. Der direkt mit der Welle 14 des Getriebemotors 34 verbundene Hebel 32 beschreibt eine Kreisbahn 29, entlang deren Umfang Schalter S1, S2 und S3 angeordnet sind, die durch die freie Stirnfläche 33 des Hebels 32 geschaltet werden, sobald diese Stirnfläche beim Umlauf des Hebels 32 mit dem jeweiligen Schaltkontakt der einzelnen Schalter in Berührung gelangt. Die Drehrichtung C des Hebelgestänges 30, 31, 32 bzw. des Getriebemotors 34 erfolgt im Uhrzeigersinn. Die Schalter S1, S2, S3 sind bevorzugt Mikroschalter, von denen ein erster Schalter S1 die Repetierstellung a, ein dritter Schalter S3 die Ausgabestellung a″ für DIN-A-1- und DIN-A-0-Formate des Kopieroriginals 1 und ein zweiter Schalter S2 die Ausgabestellung a′ der Weiche 25 für DIN-A-2-, A-3-, A-4-Formate des Kopieroriginals festlegen.

Beim Kopieren von DIN-A-0-, DIN-A-1-Formaten wird die Weiche 25 in die Repetierstellung gebracht und bildet in Verbindung mit dem Zusatzleitblech 26 den zuvor beschriebenen Schlaufenraum. Sobald die letzte Repetierung in diesem Schlaufenraum stattgefunden hat, wird die Weiche 25 aus der Transportbahn des Kopieroriginals weggeschwenkt, so daß das Kopieroriginal 1 in Richtung des Ablagetisches 21 mit Hilfe des Tragluftstromes aus der Luftdüse 23 (vgl. Fig. 2) ausgetragen werden kann.

Bei den kleineren DIN-A-2-, A-3- und A-4-Formaten ist die zusätzliche Schaltung der Weiche 25 in die Repetierstellung nicht erforderlich, da die Schlaufenbildung des Kopieroriginals 1 ohne Hilfe des Zusatzleitbleches 26 in der im Zusammenhang mit Fig. 1 beschriebenen Weise erfolgt.

**Patentansprüche**

1. Vorrichtung zum Repetieren von Kopieroriginalen in einem Kopiergerät, mit einer schwenkbaren Weiche für die getrennte Ausgabe von Originalen kleinerer und größerer Formate, dadurch gekennzeichnet, daß die Weiche (25) in der Repetierstellung zusammen mit einem gekrümmten Zusatzleitblech (26) einen Schlaufenraum für Originale größerer Formate bildet, gegen dessen Innenseite das Kopieroriginal (1) durch Blasluft während des Repetiervorgangs angedrückt ist.

2. Vorrichtung nach Anspruch 1, dadurch gekennzeichnet, daß die Weiche (25) und das Zusatzleitblech (26) eine auf das Format DIN-A-0 abgestimmte Größe und Länge aufweisen.

3. Vorrichtung nach Anspruch 1, dadurch gekennzeichnet, daß die Weiche (25) einen knickartigen Verlauf besitzt und aus unter jeweils einem stumpfen Winkel aneinandergrenzenden ebenen Teilen (25a, 25b, 25c, 25d) besteht.

4. Vorrichtung nach Anspruch 1, dadurch gekennzeichnet, daß das eine Ende der Weiche (25) über ein Hebelgestänge (30, 31, 32) mit der Welle (14) eines Getriebemotors (34) verbunden ist.

5. Vorrichtung nach Anspruch 4, dadurch gekennzeichnet, daß der direkt mit der Welle (14) des Getriebemotors (34) verbundene Hebel (32) eine Kreisbahn (29) beschreibt, entlang deren Umfang Schalter (S1, S2, S3) angeordnet sind, die durch die freie Stirnfläche (33) des Hebels (32) schaltbar sind.

6. Vorrichtung nach Anspruch 5, dadurch gekennzeichnet, daß die Schalter (S1, S2, S3) Mikroschalter sind, von denen ein erster Schalter (S1) die Repetierstellung, ein dritter Schalter (S3) die Ausgabestellung für DIN-A-1- und DIN-A-0-Formate des Kopieroriginals und ein zweiter Schalter (S2) die Ausgabestellung der Weiche für DIN-A-2-, A-3-, A-4-Formate des Kopieroriginals festlegen, sobald sie der Hebel (32) betätigt.

7. Vorrichtung nach Anspruch 1, dadurch gekennzeichnet, daß zu beiden Seiten des von der Weiche (25) und dem Zusatzleitblech (26) gebildeten Schlaufenraums zwei Luftdüsen (27, 28) angeordnet sind, deren Luftströme so gerichtet sind, daß sie eine im Schlaufenraum befindliche Originalschlaufe während des Repetiervorgangs gegen die Weiche (25) und das Zusatzleitblech (26) andrücken.

## Claims

1. A device for the repetitive copying of copying originals in a copier, this device possessing a pivotable separating guide for the separate discharging of originals of comparatively small and comparatively large formats, wherein the separating guide (25), in the repetitive-copying position, forms, together with a curved supplementary guide-plate (26), a loop compartment for originals of large formats, the copying original (1) being pressed, by blowing-air, against the inner surface of this compartment during the repetitive copying process.

2. A device as claimed in claim 1, wherein the separating guide (25) and the supplementary guide-plate (26) exhibit a width and a length which are matched to the DIN-A-0 format.

3. A device as claimed in claim 1, wherein the separating guide (25) possesses a shape which is generated by a series of discrete bends and is composed of plane portions (25a, 25b, 25c, 25d) which, each, adjoin one another at an obtuse angle.

4. A device as claimed in claim 1, wherein one of the ends of the separating guide (25) is connected, by means of a lever system (30, 31, 32), to the shaft (14) of a gear-motor (34).

5. A device as claimed in claim 4, wherein the lever (32) which is connected directly to the shaft (14) of the gearmotor (34) describes a circular path (29), switches (S1, S2, S3) being arranged along the periphery of this path, which are capable of being switched by the exposed end-face (33) of the lever (32).

6. A device as claimed in claim 5, wherein the switches (S1, S2, S3) are microswitches, of which a first switch (S1) defines the repetitive-copying position, a third switch (S3) defines the discharge-position for DIN-A-1 and DIN-A-0 formats of the copying original, and a second switch (S2) defines the discharge-position of the separating guide for DIN-A-2, A-3 and A-4 formats of the copying original, as soon as the lever (32) actuates them.

7. A device as claimed in claim 1, wherein two air nozzles (27, 28) are located at the two sides of the loop-compartment which is formed by the separating guide (25) and the supplementary guide-plate (26), the streams of air from these nozzles being directed in such a manner that, during the repetitive-copying process, they press an original, which is present as a loop in the loop-compartment, against the separating guide (25) and the supplementary guide-plate (26).

## Revendications

1. Dispositif pour tirage répété d'originaux à copier dans un copieur, comprenant un aiguillage orientable pour la délivrance séparée d'originaux de formats plus petits et plus grands, caractérisé en ce que l'aiguillage (25) se trouvant dans la position de tirage répété forme en commun avec une tôle-guide incurvée (26), une cavité en forme de boucle destinée aux originaux de plus grand format et contre la face intérieure de laquelle l'original à copier (1) se trouve appliqué, à l'aide d'air de soufflage, pendant l'opération de tirage répété.

2. Dispositif selon la revendication 1, caractérisé en ce que l'aiguillage (25) et la tôle-guide auxiliaire (26) présentent une taille et une longueur adaptées au format DIN-A-0.

3. Dispositif selon la revendication 1, caractérisé en ce que l'aiguillage (25) présente un profil de forme brisée et est constitué de parties planes (25a, 25b, 25c, 25d) se raccordant l'une à l'autre à chaque fois sous un angle obtus.

4. Dispositif selon la revendication 1, caractérisé en ce que l'une des extrémités de l'aiguillage (25) est reliée, par l'intermédiaire d'un mécanisme à leviers (30, 31, 32), à l'arbre (14) d'un moto-réducteur (34).

5. Dispositif selon la revendication 4, caractérisé en ce que le levier (32) relié directement à l'arbre (14) du moto-réducteur (34) décrit une trajectoire circulaire (29) le long de la périphérie de laquelle sont disposés des interrupteurs (S1, S2, S3) qui peuvent être manœuvrés par la surface frontale libre (33) du levier (32).

6. Dispositif selon la revendication 5, caractérisé en ce que les interrupteurs (S1, S2, S3) sont des micro-interrupteurs parmi lesquels un premier interrupteur (S1) détermine la position de tirage répété, un troisième interrupteur (S3) la position d'évacuation pour des formats DIN-A-1 et DIN-A-0 de l'original à copier et un second interrupteur (S2) la position d'évacuation, prise par l'aiguillage, pour des formats DIN-A-2, A-3, A-4 de l'original à copier, dès que le levier (32) les actionne.

7. Dispositif selon la revendication 1, caractérisé en ce que deux buses d'air (27, 28) sont disposées sur les deux côtés de la cavité en boucle formée par l'aiguillage (25) et la tôle-guide auxiliaire (26), les courants d'air de ces buses étant orientés de façon qu'ils appliquent, contre cet aiguillage (25) et cette tôle-guide auxiliaire (26) et pendant l'opération de tirage répété, une boucle formée d'un original et se trouvant dans cette cavité en boucle.

FIG.1

0 081 789

FIG.2

1

22

12

24

23

1

21

5

28

1

25a

25b

25

25c

25d

26

27

FIG.3

2

FIG. 4